Europäisches Patentamt

European Patent Office

Office européen des brevets

(19)

(11) **EP 1 345 465 A1**

(12) **EUROPEAN PATENT APPLICATION**

| | |
|---|---|
| (43) Date of publication:<br> **17.09.2003 Bulletin 2003/38** | (51) Int Cl.[7]: **H04Q 7/38**, G01S 1/26,<br> G01S 5/02 |

(21) Application number: **03396020.4**

(22) Date of filing: **11.03.2003**

| | |
|---|---|
| (84) Designated Contracting States:<br> **AT BE BG CH CY CZ DE DK EE ES FI FR GB GR**<br> **HU IE IT LI LU MC NL PT RO SE SI SK TR**<br> Designated Extension States:<br> **AL LT LV MK**<br><br>(30) Priority: **13.03.2002 FI 20020470**<br><br>(71) Applicant: **Nokia Corporation**<br> **02150 Espoo (FI)** | (72) Inventor: **Jarske, Petri**<br> **33580 Tampere (FI)**<br><br>(74) Representative: **Pursiainen, Timo Pekka**<br> **Tampereen Patenttitoimisto Oy,**<br> **Hermiankatu 12 B**<br> **33720 Tampere (FI)** |

(54) **Method and system for determining a propagation delay, and an electronic device**

(57) The present invention relates to a method for determining the propagation delay of a signal. In the method a burst signal transmitted from one or more access points is received, said signal comprising at least one part containing fixed information. Samples are taken from the received signal to produce a sampled signal ($s(n)$). The received signal comprises signal components propagated via one or several paths. In the method the sampled signal ($s(n)$) and the signal corresponding to said fixed information ($t(n)$) are correlated with each other, wherein the correlation results produced in the correlation are processed by subtracting at least one signal component from the correlation results. Said signal corresponding to said fixed information ($t(n)$) is used in the subtraction. As a result of the processing, values corresponding to the maximum correlation are searched for, wherein a temporally first value is determined from the found values corresponding to the maximum correlation, said first value being used for determining the timing of the signal.

Fig. 3

EP 1 345 465 A1

**Description**

The present invention relates to a method for determining the propagation delay of a signal in which burst signal transmitted from one or more access points is received, which signal comprises at least one part containing fixed information, and in which method samples are taken from the received signal to produce a sampled signal, and said received signal comprises signal components which have propagated via one or more different paths. The invention also relates to a system comprising one or more access points from which a burst signal is transmitted, which signal comprises at least one part containing fixed information, an electronic device containing means for receiving the burst signal transmitted by said one or more access points, means for determining the propagation delay of the received signal, and means for taking samples from the received signal to produce a sampled signal, said received signal comprising signal components which have propagated via one or more different paths. Moreover, the invention relates to an electronic device comprising means for receiving a burst signal transmitted by one or more access points, which signal comprises at least one part containing fixed information, means for determining the propagation delay of the received signal, and means for taking samples from the received signal to produce a sampled signal, said received signal comprising signal components which have propagated via one or more different paths.

In some systems applying wireless data transmission, time division technique is used for transmission of information substantially concurrently between several communication devices, such as wireless terminals, and a system. The abbreviation TDMA (Time Division Multiple Access) is used for such a technique. Thus, the transmission is conducted during predetermined time slots, wherein a predetermined time slot is allocated for a predetermined communication device. In bidirectional systems, separate transmission and reception channels are typically used, wherein simultaneous transmission and reception is possible. The time slots are referred to as transmission and reception time slots. During the transmission time slot the access point of the system, for example the base station of a mobile communication network transmits information intended for a predetermined communication device. In a corresponding manner, the communication device can transmit information to the access points during a reception time slot allocated for the communication device itself. Because of the time division aspect, such a transmission method is also called burst transmission, wherein the signal transmitted in time slots can be called a burst.

The access points of a system applying the time division technique can be synchronized with respect to each other at least in such a manner that the time slots of access points located close to each other (adjacent cells) are substantially in the same phase or at least the time differences of the time slots are known. This property can be utilized for example in positioning based on base stations (base station positioning). Thus, the signals of at least three different base stations are received in the wireless communication device, and the mutual timing of these signals is determined when the timing of the transmitted signals is known. On the basis of the timing of these signals it is possible to determine the propagation time of the signal between the base station and the wireless communication device. When the propagation speed is known, it is possible to find out the distance between the wireless communication device and the base station on the basis of the propagation times. The location of the base station is also known in the system. Thus, it is known that the wireless terminal is on the periphery of such a base station centered circle, the radius of which corresponds to the distance determined on the basis of the base station signal. By means of three base stations it is possible to determine three circles, wherein the wireless communication device is located at the intersection of these three circles. This intersection provides the position coordinates x, y.

In practice, it is not always possible to determine the propagation time of the signal in a sufficiently reliable manner in systems known at present. Errors are caused especially by multipath propagation, wherein the same signal arrives in a wireless communication device via a number of different paths. The distance travelled by these multipath propagated signals is always longer than the distance travelled by a directly propagated signal. When a multipath propagated signal is used for determining the propagation time instead of a directly propagated signal, the propagation time is estimated too long, wherein the positioning is also inaccurate. For example in cities multipath propagation is caused by buildings, topographic conditions, such as hills and other such objects in which signal reflection occurs.

Directly propagated signal is not necessarily even the strongest signal, but the directly propagated signal can be considerably attenuated before it arrives in the receiver. In a corresponding manner, a multipath propagated signal can propagate in a nearly unattenuated state. Thus, the strongest signal can be inaccurately interpreted in the wireless terminal as a directly propagated signal.

A large number of the present practical systems are based on the calculation of cross-correlation between the received signal and a known training sequence, and the maximum correlation peak or rising edge of the cross-correlation is searched for. For practical reasons, the received signal is processed with a relatively low sample rate, for example one or two samples/symbol. One reason for this is to avoid computational complexity, wherein the processing capacity necessary in the calculation can be kept relatively low. However, such a system is unreliable for example when said multipath propagation distorts the signal.

Methods have been disclosed in which the aim is to calculatorily reduce the effect of multipath propagated signal components. One example of such a method is the maximization algorithm of the expectation value (EM, Expectation Maximize), which is illustrated for example in the publication by M. Feder, E. Weinstein, "Parameter Estimation of Superimposed Signals Using the EM Algorithm", IEEE Trans. on Acoustics, Speech, and Signal Processing, vol. 36, no. 4, April 1988, pp. 477 to 489. The drawback in such methods is for instance that a great deal of computing capacity is required for solving them, and it may be difficult and expensive to arrange such capacity especially in portable devices.

It is an aim of the present invention to provide an improved method and system for determining a propagation delay especially for positioning of an electronic device. The invention is based on the idea, that multipath propagated signals are separated from the signal received in the electronic device to detect the directly propagated signal. The detection of the directly propagated signal is conducted by cancelling signal components from the processed signal. This directly propagated signal can be used thereafter for more precise positioning. In the method the peak or rising edge of the produced signal is searched for, and the timing information of the same is used for determining the propagation delay of the signal. More precisely, the method according to the present invention is primarily characterized in that in the method a sampled signal and the signal corresponding to said fixed information are correlated with each other, wherein the correlation results formed in the correlation are processed by separating at least one signal component from the correlation results, in which separation the signal corresponding to said fixed information is used, that values corresponding to the maximum correlation are searcher for in the signal produced as a result of the processing, and a temporally first value is determined from the found values corresponding to the maximum correlation, said first value being used for determining the timing of the signal.

The system according to the present invention is primarily characterized in that in the system also comprises correlation means for correlating a sampled signal and a signal corresponding to said fixed information with each other, means for processing the correlation results produced in the correlation by separating at least one signal component from the correlation results, in which separation the signal corresponding to said fixed information is arranged to be used, means for searching for the values corresponding to the maximum correlation in the signal produced as a result of the processing, and means for determining the temporally first value from the found values and using said first value for determining the timing of the signal.

The electronic device according to the present invention is primarily characterized in that in the electronic device also comprises correlation means for correlating a sampled signal and the signal corresponding to said fixed information with each other, means for processing the correlation results produced in the correlation by separating at least one signal component from the correlation results, in which separation the signal corresponding to said fixed information is arranged to be used, means for searching for the values corresponding to the maximum correlation in the signal produced as a result of the processing, and means for determining a temporally first value from the found values and using said first value for determining the timing of the signal.

The present invention shows remarkable advantages over solutions of prior art. By means of the method according to the invention it is possible to separate multipath propagated signals from directly propagated signals in the received signal in a more reliable manner, and thus the signal used for positioning better corresponds to the distance between the base station and the electronic device. This improves the accuracy of positioning. The act of applying the method according to the invention does not require a great deal of computing capacity in the apparatus.

In the following, the invention will be described in more detail with reference to the appended drawings, in which

Fig. 1          shows a system according to a preferred embodiment of the invention in which positioning based on base stations is applied,

Fig. 2          shows an electronic device according to a preferred embodiment of the invention in a reduced block chart,

Fig. 3          shows the implementation of the method according to a preferred embodiment of the invention in a reduced block chart,

Figs 4a to 4c    show in steps how the execution of the method according to the invention affects the correlation result,

Fig. 5          illustrates the terminating step applied in the method according to a preferred embodiment of the invention, and

Fig. 6          shows simulation results of the method according to a preferred embodiment of the invention when compared to a simulation result according to prior art.

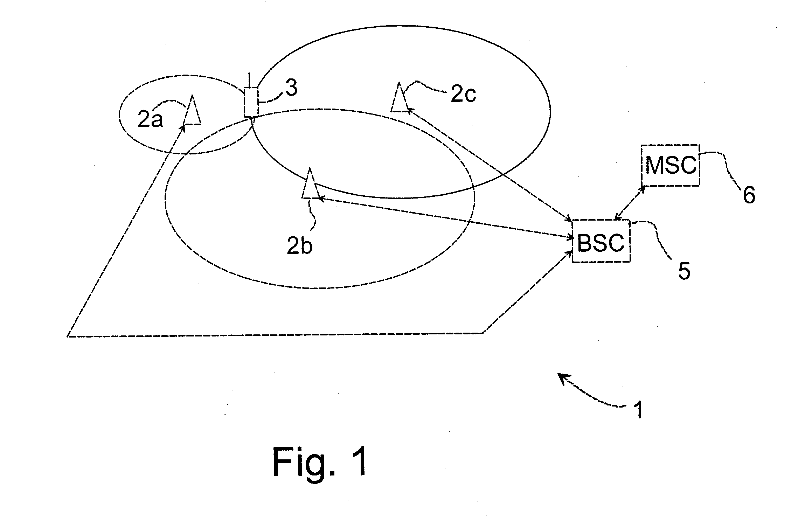

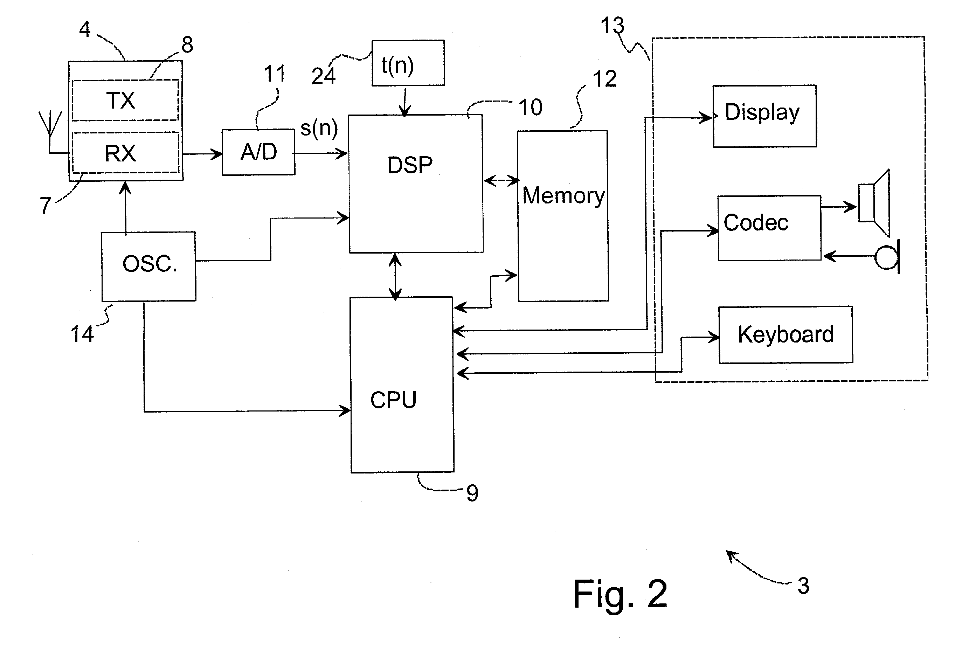

Figure 1 shows the system according to a preferred embodiment of the invention in a reduced manner. The system comprises a wireless communication network 1, such as a mobile communication network. This wireless communication network comprises access points 2a, 2b, 2c, such as base stations. Via these base stations the system can communicate with electronic devices 3 containing wireless communication means 4 (Fig. 2). To apply the invention, the wireless communication means 4 of the electronic device 3 require primarily a receiver by means of which signals transmitted by the base stations 2a, 2b, 2c are received. In practice, however, the wireless communication means 4 also comprise a transmitter (not shown) for transmission of signals to a base station 2a, 2b, 2c of the wireless communication network. The base stations are controlled by means of a base station controller (BSC) 5 which for example synchronizes the base stations. One base station controller may control more than one base station. The wireless communication network 1 also comprises one or more control stations 6, such as a mobile switching centre (MSC) by means of which the function of the wireless communication network is controlled.

Fig. 2 shows the electronic device 3 according to a preferred embodiment of the invention in a reduced block chart. The electronic device 3 further comprises said wireless communication means 4, comprising at least a receiver 7 and possibly also a transmitter 8. Furthermore, the electronic device 3 comprises one or more processors, such as a microprocessor, a micro controller, or the like.

Furthermore, the electronic device 3 may contain a digital signal processing unit 10, by means of which it is possible to execute at least part of the signal processing functions. The electronic device 3 is provided with correlation means 8, which can be either hardware- or software-implemented for example in said digital signal processing unit. By means of an analog-to-digital converter 11, the signal received in the receiver 7 and converted to intermediate or baseband frequency is converted into a digital signal. This is advantageously conducted in such a manner that samples are taken at intervals from the analog signal, and these samples are stored in the memory 12. The user interface 13 is used in a manner known as such for the operating functions of the electronic device, for displaying information for the user as well as for entering information to the electronic device 3. In a timer unit 14 timing signals necessary in the function of the electronic device 3 are produced as well as oscillator signals which are used for example in the receiver 7 to convert high frequency signals into signals of intermediate and/or baseband frequency. In said timer block 14 it is also possible to produce timings necessary for sampling.

In connection with the present invention, it is not significant as such what kind of an electronic device 3 is used in the positioning. The electronic device 3 can be, for example, be a wireless communication device, a mobile station, a positioning receiver, or another electronic device 3 containing said wireless communication means 4.

In the wireless communication network 1, time division multiple access (TDMA) technology is applied, wherein a separate time slot is allocated for each connection for data transmission to be carried out. Thus, the transmission takes place in bursts. In connection with each burst a training sequence is transmitted for the synchronization of the receiver 7 of the electronic device 3, said training sequence being a predetermined bit pattern. This bit pattern is known in the electronic device 3, wherein it is possible to conduct correlation between the received signal and said training sequence with the correlation means 8. It is typically required that the training sequences have good correlation properties. For example in the GSM system the length of the training sequence is 26 bits and it is transmitted in the middle of the burst.

The base stations can be synchronized with each other so that each base station 2a, 2b, 2c connected to the same base station controller 5 transmits the training sequence substantially simultaneously, or the time differences of the transmissions of different base stations are known or they can be measured. The base stations connected to the same base station controller are typically adjacent base stations, i.e. adjacent cells. Each adjacent base station, however, uses a different frequency in the transmission, and thus the receiver is capable of distinguishing the signals of different base stations from each other.

In the following, the operation of the method according to a preferred embodiment of the invention will be described. For this purpose, some concepts used in the description will be defined. The signal sampled in the analog-to-digital converter is marked with r(n) in which n= 0,1, ..., L-1. These samples are complex numbers, i.e. they contain a real part and an imaginary part, which can also be marked as I- (In phase) and Q-(Quadrature phase) components. The samples corresponding to the received training sequence are included in this sampled signal r(n). The known training sequence transmitted in the burst is marked with t(n), in which n=0,1 ..., M-1. These samples can generally be complex. The correlation between the training sequence and any other signal s(n) can be marked in the following manner:

$$\phi_{ts}(n) = \sum_{k=0}^{M-1} t(k)s(n+k) \qquad (1)$$

In this description, the cancellation of a training sequence component from the signal at the moment of time k refers to the act of subtracting the scaled training sequence samples from the signal, starting from the sample k(s (k)). This can be represented mathematically for example in the following way:

$$s'(n) = \begin{cases} s(n) - c \cdot t(n-k), n = k, k+1, \ldots, k+M-1 \\ s(n) \qquad \text{other values of } n \end{cases} \qquad (2)$$

The scaling factor c presented in this formula is a generally complex value, but it can also be a real number in which the imaginary part is thus 0.

The receiver of the electronic device 7 is set to receive the signals transmitted by the desired base station by setting the transmission frequency of this selected base station as the reception frequency of the receiver. The signals are converted into an intermediate frequency or a baseband frequency signal, and they are conveyed to an analog-to-digital converter 11 in which samples are taken from the signal. At this stage, the sampling frequency is advantageously such that one or more samples are taken from the bit modulated to the signal. Thus, for example in a GSM system in which the training sequence comprises 26 bits, either 26 or 52 samples are taken from the part of the signal corresponding to the length of the training sequence. In practice, because the timing is not known at this stage, samples are taken in a considerably longer period of time. The samples are stored in a memory 12.

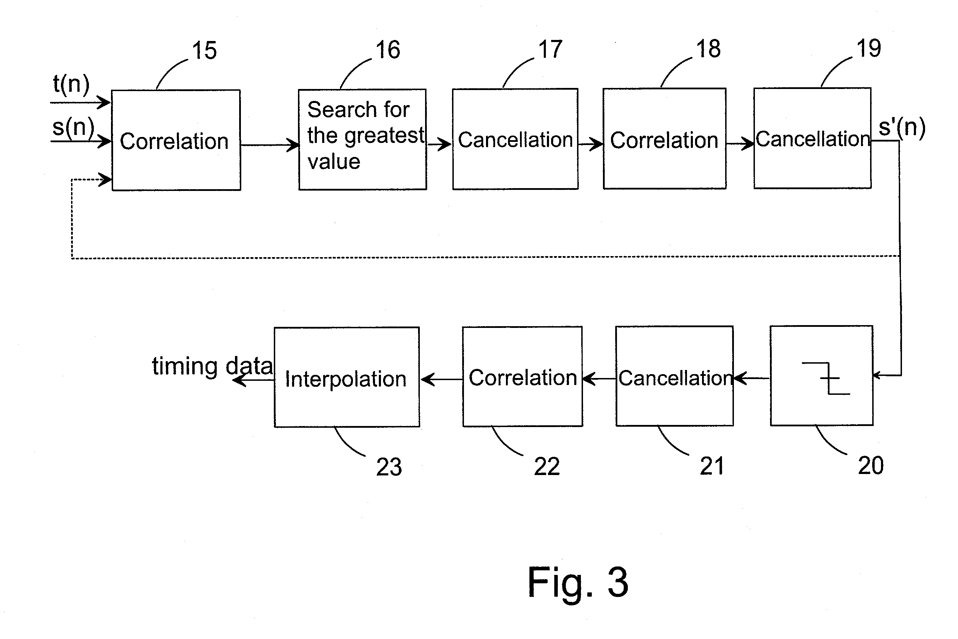

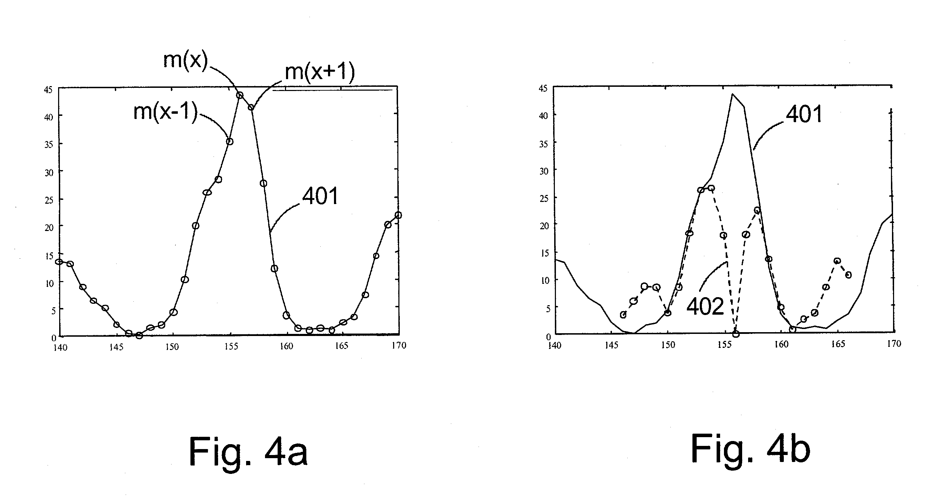

After a sufficient number (L) of samples has been stored in the memory, the signal components that have propagated via different paths are cancelled from the sample signal s(n) in the following manner: At first, a first correlation stage is conducted in which cross-correlation between the samples and the bit string corresponding to the training sequence t(n) is effected in a first correlation block 15 (Fig. 3). The bit pattern corresponding to the training sequence t(n) is for example stored in the memory 12, or it can be formed by means a suitable signal generator. This is illustrated by means of block 24 in Fig. 2. The correlation is advantageously conducted according to the formula (1). Thereafter the greatest maximum value (global maximum value) is searched from the correlation result in a search block 16. When this greatest maximum value (the value corresponding to the maximum correlation) has been found, such a sample value is also selected from the sample values preceding and following said greatest maximum value, which is closest to said greatest maximum value. This is illustrated in the appended Fig. 4a, in which the greatest maximum value is marked with the reference m(x), the preceding sample value with the reference m(x-1) and the following sample value with the reference m(x+1), respectively. The reference numeral 401 represents the correlation result. In the situation according to Fig. 4a, the sample m(x+1) following this sample has the value closest to the greatest maximum value. Thereafter the latter of these two selected values m(x), m(x+1), in this case m(x+1), is selected as a starting value for the first cancellation stage. The first cancellation stage is conducted in the first cancellation block 17 advantageously according to the above-presented formula (2). This means that the cancellation starts from the sample n=x+1. The beginning of the sample sequence, i.e. samples s(0), s(1), ..., s(x) are retained. Starting from the sample x+1, the scaled values of the training sequence ct(x+1), ct(x+2), ..., ct(x+M) are subtracted from the sample values. The rest of the samples, i.e. samples s(x+M+1), ..., s(L-1) are retained at this stage.

After the first cancellation stage the operation moves on to the second correlation block 18, in which a second correlation stage is conducted. This time the cross-correlation is conducted between the signal produced in the first cancellation block 17 and the training sequence in such a manner that the cross-correlation point is the earlier value of the two values selected at the preceding search stage, i.e. in this example situation the sample m(x). Thereafter the signal generated in the second correlation block 18 is conveyed to the second cancellation block 19, in which corresponding cancellation according to formula (2) is conducted, starting, however from the first sample selected at the first search stage. Thus, at the second cancellation stage the samples corresponding to the scaled training sequence are cancelled from the signal remaining from the first cancellation stage, starting from the sample n=x. The result of this second cancellation stage is illustrated in the appended Fig. 4b, in which a broken line 402 represents the signal generated in connection with the second cancellation stage, and a solid line 401 represents the first correlation result.

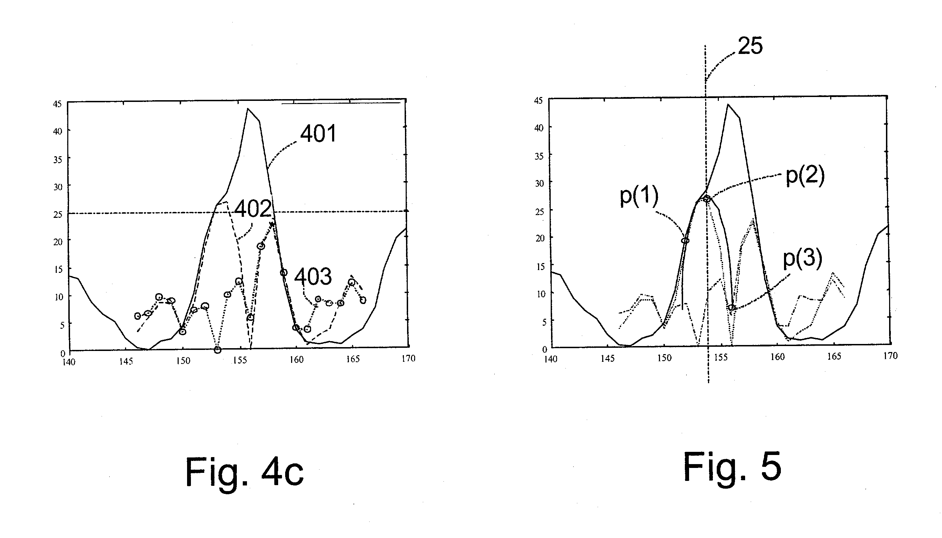

The above-presented first correlation stage, search stage, the first cancellation stage, the second correlation stage and the second cancellation stage are repeated for a predetermined number of times, for example three times. The number of the repetitions depends, *inter alia,* on the number of components desired to be cancelled from the original signal. In practice, the number of repetitions is advantageously kept relatively low, i.e. in a few repetitions. Fig. 4c shows an example situation after two repetitions. A curve 403 illustrates the signal following the second repetition stage conducted in connection with the second repetition.

It should also be noted that of the two values searched at the search stage, either temporally later or earlier value is selected for the first cancellation stage. The selection is thus not based on the order of magnitude of these two values. Correspondingly, the value that has not been selected in the first cancellation stage as a starting point of the cancellation is selected for the second cancellation stage. The above-described example disclosed such an order that the latter of the two values is selected in the first cancellation stage, wherein the first one of these two values is selected for the second cancellation stage. In the method according to the invention, the selection can also be conducted vice versa.

After the selected number of repetitions has been conducted, a terminating stage is conducted to determine a more precise timing. From the values corresponding to the components cancelled at the above-presented stages, the values exceeding a predetermined threshold value are first examined in a comparison block 20. From these values exceeding the threshold value, the earliest value is selected. Thus, it is assumed that the component corresponding to this value is the directly propagated signal. For example when the situation of Fig. 4c is examined and for example 25 is selected as the threshold value, the values m(x) and m(x+1) selected in the first repetition and the values m(x'-1), m(x') selected in the second repetition exceed this threshold value. Within these values, the earliest one is the value m(x'-1), and thus in this situation this value is selected for the following timing stage. Thus, two values were selected at each repetition stage, of which values at least the largest one is compared to said threshold value.

In a third cancellation block 21 all other components, except the previously selected component are cancelled from the original sample signal s(n). Here, the formula (2) is applied. Further referring to the above-presented example situation, cancellation is conducted for components corresponding to samples m(x), m(x+1), and m(x'), but the component corresponding to the sample m(x'-1) is not cancelled.

After the third cancellation stage has been completed, correlation is also conducted in a third correlation block 22. Here, cross-correlation is conducted at a few points between the signal produced in the third cancellation block 21 and the training sequence. These points are selected in the vicinity of the maximum value corresponding to the component that was not cancelled. The correlation is conducted for example at three points in the vicinity of this maximum value. After the correlation, interpolation is conducted in an interpolation block 23, if necessary, in which the aim is to attain the desired time resolution. In the interpolation for example a curve, such as a parabola is arranged in the correlation results. Fig. 5 shows the act of arranging the parabola to travel via three points p(1), p(2), p(3). The peak value is also searched for in this interpolated curve, said peak value being selected as a time estimation of a measurement, and it is assumed that this corresponds directly to the propagated signal. In Fig. 5, a broken line 25 is placed in the location of this peak value. The time estimation is stored in the memory to be used in the actual positioning.

Although it is disclosed above that a maximum value is used in determining the timing, it is obvious that the timing can also be conducted on the basis of the rising edge of the signal corresponding to this maximum value. Thus, the moment of timing is determined on the basis of the moment of time in which the signal exceeds the predetermined value.

If necessary, it is possible to improve the timing accuracy by producing more than one measurement result for example by taking samples on a longer period of time in such a manner that the training sequence transmitted in different bursts is repeated at fixed intervals in the sample sequence. Thus, each measurement result is taken from a section of a sample sequence, and different measurement results are combined with a suitable method, for example by calculating an average value.

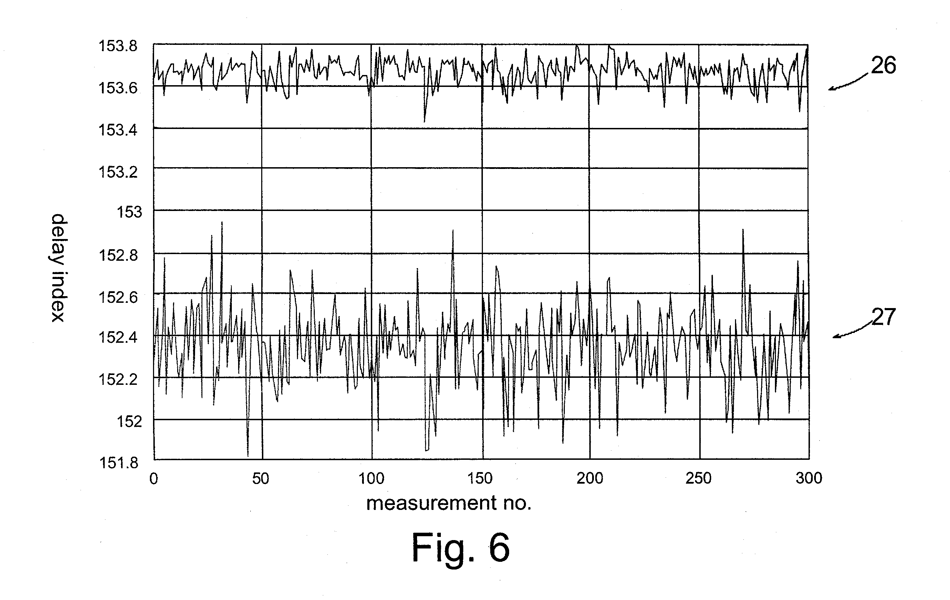

Further, Fig. 6 shows simulation results when using a method of prior art and the method according to the invention. The drawing shows that by means of the method according to the invention a considerably more accurate result (marked with the reference numeral 26), for example a smaller variance is attained, when compared to the prior art method (marked with the reference numeral 27).

Hereinabove, the method according to the invention has been described in connection with the signal transmitted by one base station, but for example in positioning, signals of several base stations have to be received. Thus, the above-presented measures are repeated for a desired number of supporting stations, wherein the timing of the training sequence of different base station signals are obtained. When it is also known that the transmissions of the base stations are synchronized with each other either in such a manner that different base stations transmit substantially simultaneously, or there is a predetermined time difference in the transmissions of the same, it is possible to detect the mutual time differences between the base stations when the signals arrive in the receiver. The location of the base stations is also known, and thus it is possible to calculate the position of the electronic device 3 by using the time difference information and location data The accuracy of the timing can be considerably improved by means of the method according to the invention, especially when multipath propagation affects the travel of the base station signals. Thus, it is also possible to considerably improve the positioning accuracy.

It is obvious that the method according to the invention, by means of which the timing accuracy can be improved, can be applied in contexts other than positioning as well.

The present invention is not limited solely to the above-presented embodiments, but it can be modified within the scope of the appended claims.

**Claims**

1. A method for determining the propagation delay of a signal, in which method a burst signal transmitted from one or more access points is received, which signal comprises at least one part containing fixed information, and in which method samples are taken from the received signal to produce a sampled signal (s(n)), and said received signal comprises signal components which have propagated via one or more different paths, **characterized in that** in the method the sampled signal (s(n)) and the signal corresponding to said fixed information (t(n)) are correlated with each other, wherein the correlation results produced in the correlation are processed by separating at least one signal component from the correlation results, in which separation the signal corresponding to said fixed information (t(n)) is used, and that values corresponding to the maximum correlation are searched for in the signal produced as a result of the processing, and a temporally first value is determined from the found values corresponding to the maximum values, said first value being used for determining the timing of the signal.

2. The method according to claim 1, **characterized in that** the time data of said temporally first value is used in said determination of the timing of the signal.

3. The method according to claim 1, **characterized in that** the value corresponding to the maximum correlation is the maximum value of the signal.

4. The method according to claim 1, **characterized in that** the value corresponding to the maximum correlation is the rising edge of the signal.

5. The method according to claim 1, 2, 3, or 4, **characterized in that** at least the following steps are taken in the method:

   - a first correlation stage, in which cross-correlation between the sampled signal (s(n)) and the signal corresponding to said fixed information (t(n)) is conducted,
   - a search stage, in which the greatest value corresponding to the maximum correlation is searched for in the signal produced at the first correlation stage, and two values are selected, one of the values being said found value corresponding to the maximum correlation, and the other one being greater than the value temporally preceding or following said found greatest value corresponding to the maximum correlation,
   - a first cancellation stage, in which at least one signal component is separated from the signal produced at the first correlation stage by subtracting the signal corresponding to said fixed information from the signal, in which one of the two values selected at said search stage is selected as a starting point,
   - a second correlation stage in which cross-correlation between the signal produced at the first cancellation stage and the signal corresponding to said fixed information is conducted,
   - a second cancellation stage, in which at least one signal component is separated from the signal produced at the second correlation stage by subtracting the signal corresponding to said fixed information from the signal, in which the one of the two values selected at said first search stage that was not selected as a starting point in said first cancellation stage, is selected as a starting point,
   - the above-mentioned stages are repeated for a predetermined number of times, and in each repetition, the signal produced at said first correlation stage and said second cancellation stage is used, and that

   at a terminating stage, all the components found at earlier stages are cancelled from the original signal, excluding the component with the earliest timing.

6. The method according to claim 5, **characterized in that** in said terminating stage

   - it is examined which values selected at each said search stage exceed the predetermined threshold value,
   - the earliest one of the values exceeding the threshold value is selected,
   - all other components, except the component corresponding to the previously selected value, are cancelled from the original sample signal (s(n)),
   - cross-correlation is conducted between the previously produced signal and the signal corresponding to said fixed information at least in three points to produce at least three correlation results, and
   - non-linear interpolation is conducted on the basis of said at least three correlation results,

   wherein a peak is searched for in the interpolation result, and the timing information of the peak that is found is used for determining the timing of the signal.

7. The method according to claim 5 or 6, **characterized in that** at said cancellation stages, predetermined fixed information is subtracted from the signal in a scaled format in such a manner that the correlation between the signal produced as a result of the cancellation and said fixed information is substantially zero at the point from which the scaled fixed information is cancelled.

8. The method according to any of the claims 1 to 7, **characterized in that** signals of at least three different access points are received in the electronic device (3), wherein the timing of each received signal is determined, and said at least three different sets of timing data are used for determining the position of the electronic device (3).

9. The method according to any of the claims 1 to 8, **characterized in that** base stations of the mobile communication network are used as access points.

10. A system comprising one or more access points (2a, 2b, 2c) from which a burst signal is transmitted, which signal comprises at least one part containing fixed information, an electronic device (3) comprising means (7) for receiving the burst signal transmitted by said one or more access points, means for determining a propagation delay of the received signal and means (11) for taking samples from the received signal to produce a sampled signal (s(n)), said received signal comprising signal components which have propagated via one or more different paths, **characterized in that** the system also comprises correlation means for correlating the sampled signal (s(n)) and the signal corresponding to said fixed information with each other, means for processing the correlation results produced in the correlation by separating at least one signal component from the correlation results, in which separation the signal corresponding to said fixed information (t(n)) is arranged to be used, means for searching for values corresponding to the maximum correlation in the signal produced as a result of the processing, and means for determining a temporally first value of the found values and using said first value for determining the timing of the signal.

11. The system according to claim 10, **characterized in that** means for determining the propagation delay of the received signal comprise:

    - first correlation means (15) for performing cross-correlation between the sampled signal (s(n)) and the signal corresponding to said fixed information (t(n)),
    - search means (6) for searching for the greatest value corresponding to the maximum correlation in the signal produced at the first correlation stage, and selecting two values, one of which is said found value corresponding to the maximum correlation, and the other one is greater than value temporally preceding or following said found greatest value corresponding to the maximum correlation,
    - first cancellation means (17) for separating at least one signal component from the signal produced at the first correlation stage by subtracting the signal corresponding to said fixed information from the signal, in which one of the two values selected at said search stage is selected as a starting point,
    - second correlation means (18) for performing cross-correlation between the signal produced at the first cancellation stage and the signal corresponding to said fixed information,
    - second cancellation means (19), for separating at least one signal component from the signal produced at the second correlation stage by subtracting the signal corresponding to said fixed information from the signal, in which one of the two values selected at said first search stage that was not selected as a starting point in said first cancellation stage, is selected as a starting point,
    - means for conveying the signal produced in said second cancellation means to said first correlation means to perform a predetermined number of repetitions for the sampled signal, and
    - terminating means (20 to 23) for cancelling all the components found at earlier stages from the original signal, excluding the component with the earliest timing.

12. The system according to claim 11, **characterized in that** said terminating means comprise:

    - means (20) for examining which values selected at each search stage exceed a predetermined threshold value, wherein the earliest value is arranged to be selected from the values exceeding the threshold value.
    - third cancellation means (21) for cancelling all other components, except the component corresponding to the previously selected value from the original sample signal (s(n)),
    - third correlation means (22) for performing cross-correlation between the previously produced signal and the signal corresponding to said fixed information at least in three points to produce at least three correlation results,
    - interpolation means (23) for performing non-linear interpolation on the basis of said at least three correlation results, and searching for a peak from the interpolation result,

wherein the timing information of this found peak is arranged to be used for determination of the propagation delay of the signal.

**13.** The system according to any of the claims 11 to 12, **characterized in that** signals of at least three different access points are arranged to be received in the electronic device (3), wherein the propagation delay of each received signal is arranged to be determined, and said at least three different sets of propagation time data are arranged to be used for determining the position of the electronic device (3).

**14.** The system according to claim 10, 11 12, or 13, **characterized in that** the base stations of a mobile communication network are used as access points, and that the electronic device (3) comprises means (4) for performing mobile station functions.

**15.** An electronic device comprising means (7) for receiving a burst signal transmitted by one or more access points (2a, 2b, 2c), said signal comprising at least one part containing fixed information, means for determining a propagation delay of the received signal and means (11) for taking samples from the received signal to form a sampled signal ($s(n)$), said received signal comprising signal components propagated via one or more different paths, **characterized in that** the electronic device also comprises correlation means for correlating the sampled signal ($s(n)$) and the signal corresponding to said fixed information ($t(n)$) with each other, means for processing the correlation results produced in the correlation by separating at least one signal component from the correlation results, in which separation the signal corresponding to said fixed information ($t(n)$) is arranged to be used, means for searching for values corresponding to the maximum correlation in the signal produced as a result of the processing, and means for determining a temporally first value from the found values and using the same for determining the timing of the signal.

**16.** The electronic device according to claim 15, **characterized in that** means for determining the propagation delay of the received signal comprise:

- first correlation means (15) for performing cross-correlation between the sampled signal ($s(n)$) and the signal corresponding to said fixed information ($t(n)$),
- search means (16) for searching for the greatest value corresponding to the maximum correlation in the signal produced at the first correlation stage, and selecting two values, one of which is said found value corresponding to the maximum correlation, and the other one is greater than the value temporally preceding or following said found greatest value corresponding the greatest maximum correlation,
- first cancellation means (17) for separating at least one signal component from the signal produced at the first correlation stage by subtracting the signal corresponding to said fixed information from the signal, in which one of the two values selected at said search stage is selected as a starting point,
- second correlation means (18) for performing cross-correlation between the signal produced at the first cancellation stage and the signal corresponding to said fixed information,
- second cancellation means (19), for separating at least one signal component from the signal produced at the second correlation stage by subtracting the signal corresponding to said fixed information from the signal, in which one of the two values selected at said first search stage that was not selected as a starting point in said first cancellation stage, is selected as a starting point,
- means for conveying the signal produced in said second cancellation means to said first correlation means to perform a predetermined number of repetitions for the sampled signal, and
- terminating means (20 to 23) for cancelling all the components found at earlier stages from the original signal, excluding the component with the earliest timing.

**17.** The electronic device according to any of the claims 15 to 16, **characterized in that** it comprises means (4) for performing mobile station functions.

Fig. 1

Fig. 2

Fig. 3

Fig. 4b

Fig. 4a

13

Fig. 5

Fig. 4c

Fig. 6

# EP 1 345 465 A1

**European Patent Office**

## PARTIAL EUROPEAN SEARCH REPORT

Application Number

which under Rule 45 of the European Patent Convention shall be considered, for the purposes of subsequent proceedings, as the European search report

EP 03 39 6020

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 19112 A (NOKIA NETWORKS OY ;VILLE RUUTU (FI); ALANEN MARKO (FI); GUNNARSSON) 15 March 2001 (2001-03-15) | 1,10,15 | H04Q7/38 G01S1/26 G01S5/02 |
| Y | * figure 3 * <br> * page 17, line 7 - page 21, line 5 * <br> --- | 5,11,16 | |
| X | EP 0 767 594 A (NOKIA MOBILE PHONES LTD) 9 April 1997 (1997-04-09) <br> * figure 5 * <br> * column 8, line 16 - line 22 * <br> --- | 1,10,15 | |
| D,Y | FEDER M.; WEINSTEIN E.: "Parameter Estimation of Superimposed Signals Using the EM Algorithm" IEEE TRANSACTIONS ON ACOUSTICS, SPEECH, AND SIGNAL PROCESSING , vol. 36, no. 4, April 1998 (1998-04), pages 477-489, XP002242821 <br> * abstract * <br> * paragraph [00IV] * <br> --- <br> -/-- | 5,11,16 | |

TECHNICAL FIELDS SEARCHED (Int.Cl.7)

H04Q
G01S

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :
1-17

Claims not searched :

Reason for the limitation of the search:
partially unclear claims

| Place of search | Date of completion of the search | Examiner |
|---|---|---|
| MUNICH | 4 June 2003 | Lupo, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

16

**European Patent** **PARTIAL EUROPEAN SEARCH REPORT** Application Number

**Office** EP 03 39 6020

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | US 5 930 248 A (GRANSTROM BO ANDERS ET AL) 27 July 1999 (1999-07-27)<br>* figure 4 *<br>* column 7, line 30 - line 38 *<br>--- | 1-17 | |
| A | US 6 349 207 B1 (PIPON FRANCOIS ET AL) 19 February 2002 (2002-02-19)<br>* figure 12 *<br>* figure 13 *<br>----- | 1-17 | |
| | | | TECHNICAL FIELDS SEARCHED (Int.Cl.7) |

EPO FORM 1503 03.82 (P04C10)

## ANNEX TO THE EUROPEAN SEARCH REPORT
## ON EUROPEAN PATENT APPLICATION NO.

EP 03 39 6020

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2003

| Patent document cited in search report | | Publication date | Patent family member(s) | | Publication date |
|---|---|---|---|---|---|
| WO 0119112 | A | 15-03-2001 | AU | 7649300 A | 10-04-2001 |
| | | | BR | 0013697 A | 07-05-2002 |
| | | | CA | 2382140 A1 | 15-03-2001 |
| | | | CN | 1377563 T | 30-10-2002 |
| | | | WO | 0119112 A1 | 15-03-2001 |
| | | | EP | 1208716 A1 | 29-05-2002 |
| | | | JP | 2003509661 T | 11-03-2003 |
| EP 0767594 | A | 09-04-1997 | FI | 954705 A | 04-04-1997 |
| | | | EP | 0767594 A2 | 09-04-1997 |
| | | | US | 6108553 A | 22-08-2000 |
| US 5930248 | A | 27-07-1999 | AU | 731902 B2 | 05-04-2001 |
| | | | AU | 6643798 A | 22-09-1998 |
| | | | BR | 9807280 A | 23-05-2000 |
| | | | CN | 1255258 T | 31-05-2000 |
| | | | EP | 0965187 A1 | 22-12-1999 |
| | | | HU | 0000715 A2 | 28-06-2000 |
| | | | WO | 9839860 A1 | 11-09-1998 |
| | | | TW | 493326 B | 01-07-2002 |
| US 6349207 | B1 | 19-02-2002 | FR | 2766320 A1 | 22-01-1999 |
| | | | EP | 0931429 A1 | 28-07-1999 |
| | | | WO | 9904588 A1 | 28-01-1999 |

EPO FORM P0459

For more details about this annex : see Official Journal of the European Patent Office, No. 12/82